# EUROPEAN PATENT APPLICATION

(11) **EP 2 674 467 A1**
(43) Date of publication of application: **18.12.2013**
(21) Application number: 12744597.1
(22) Date of filing: 03.02.2012
(51) Int. Cl.: C09J 201/00, C09J 7/00, C09J 11/04, C09J 121/00, C09J 133/04, C09J 183/04

(54) **ADHESIVE**

(30) Priority: 10.02.2011 JP 2011027057; 31.01.2012 JP 2012017656; 31.01.2012 JP 2012017657; 31.01.2012 JP 2012017658; 31.01.2012 JP 2012017659
(71) Applicant: Nitto Denko Corporation, Ibaraki-shi, Osaka 567-8680 (JP)
(72) Inventor: SUGINO, Yusuke, Ibaraki-shi, Osaka 567-8680 (JP); NAGASAKI, Kunio, Ibaraki-shi, Osaka 567-8680 (JP); DOI, Kohei, Ibaraki-shi, Osaka 567-8680 (JP); HIDA, Takafumi, Ibaraki-shi, Osaka 567-8680 (JP); NAKAYAMA, Yusuke, Ibaraki-shi, Osaka 567-8680 (JP)
(74) Representative: Müller-Boré & Partner Patentanwälte
(86) International application number: PCT/JP2012/052477
(87) International publication number: WO 2012/108348

(57) **Abstract**

Provided is a pressure-sensitive adhesive agent convertible into an adhesive agent, which allows adherends to be instantly fixed to each other, allows the adherends to be reattached to each other, is excellent in processability such as being able to be cut into a sheet shape, and is not peeled from the adherends even when exposed to a high-temperature atmosphere such as one in a fire. The pressure-sensitive adhesive agent convertible into an adhesive agent has pressure-sensitive adhesive property before being sintered, and has adhesive property after being sintered.

## Description

### Technical Field

The present invention relates to a pressure-sensitive adhesive agent convertible into an adhesive agent (hereinafter sometimes referred to as convertible pressure-sensitive adhesive agent), and more specifically, to a convertible pressure-sensitive adhesive agent with sinterability, which has pressure-sensitive adhesive property before being sintered, and has adhesive property after being sintered.

### Background Art

A sinterable adhesive agent typified by an aqueous dispersion of inorganic particles (see, for example, Patent Literature 1) does not have pressure-sensitive adhesive property. Therefore, the sinterable adhesive agent involves difficulty in reattachment of adherends to each other. In addition, such sinterable adhesive agent requires time or heat treatment before achieving fixation after being applied, and hence is difficult to cut into a sheet shape by punching or the like.

On the other hand, a pressure-sensitive adhesive agent (see, for example, Patent Literature 2) has an advantage of allowing adherends to be instantly fixed to each other. However, there is a problem in that, when exposed to a high-temperature atmosphere such as one in a fire, the pressure-sensitive adhesive agent is peeled from the adherends owing to decomposition of its polymer component.

### Citation List

### Patent Literature

[PTL 1] JP 2002-173379 A
[PTL 2] JP 2005-082775 A

### Summary of Invention

### Technical Problem

An object of the present invention is to provide a convertible pressure-sensitive adhesive agent which allows adherends to be instantly fixed to each other, allows the adherends to be reattached to each other, is excellent in processability such as being able to be cut into a sheet shape, and is not peeled from the adherends even when exposed to a high-temperature atmosphere such as one in a fire.

### Solution to Problem

The convertible pressure-sensitive adhesive agent of the present invention has pressure-sensitive adhesive property before being sintered, and has adhesive property after being sintered.

In a preferred embodiment, the convertible pressure-sensitive adhesive agent of the present invention includes sinterable particles and a polymer component.

In a preferred embodiment, the polymer component has a cross-linked structure.

In a preferred embodiment, all monomer components for forming the polymer component contain a cross-linking monomer at a content ratio of 2.0 wt% to 60 wt%.

In a preferred embodiment, the cross-linking monomer has at least one kind of functional group selected from an acryloyl group, an epoxy group, an isocyanate group, a carboxyl group, a hydroxyl group, a vinyl group, and an amino group.

In a preferred embodiment, the polymer component contains an antioxidant.

In a preferred embodiment, the content ratio of the antioxidant is 0.1 wt% to 10 wt% with respect to the solid content of the convertible pressure-sensitive adhesive agent.

In a preferred embodiment, the antioxidant includes at least one kind selected from a phenol-based antioxidant, an amine-based antioxidant, an amino ether-based antioxidant, and a phosphorus-based antioxidant.

In a preferred embodiment, the deformation point of each of the sinterable particles is 250°C to 800°C.

In a preferred embodiment, the sinterable particles contain two or more kinds of sinterable particles having different deformation points.

In a preferred embodiment, the deformation point of a sinterable particle having the lowest deformation point among the two or more kinds of sinterable particles having different deformation points is 250°C to 800°C.

In a preferred embodiment, the deformation point of the sinterable particle having the lowest deformation point is 250°C to 500°C.

In a preferred embodiment, the sinterable particles are each formed of at least one kind of component selected from silicic acid, boric acid, borosilicic acid, aluminum oxide, calcium oxide, sodium oxide, lithium oxide, and phosphorus oxide.

In a preferred embodiment,the average particle diameter of each of the sinterable particles is 0.1 µm to 1,000 µm.

In a preferred embodiment, the content ratio of the sinterable particles is 1 wt% to 80 wt% with respect to a solid content of the convertible pressure-sensitive adhesive agent.

In a preferred embodiment, the polymer component includes at least one kind of component selected from a rubber-based polymer, a silicone-based polymer, and an acrylic polymer.

In a preferred embodiment, the convertible pressure-sensitive adhesive agent of the present invention has a sheet shape.

In a preferred embodiment, the thickness of the convertible pressure-sensitive adhesive agent of the present invention is 1 µm to 1,000 µm.

In a preferred embodiment, a material for forming the polymer component contains a photopolymerization initiator.

In a preferred embodiment, the convertible pressure-sensitive adhesive agent of the present invention is obtained by photopolymerization.

A production method for the convertible pressure-sensitive adhesive agent of the present invention includes: partially polymerizing a polymerizable composition, which contains monomer components to be used for forming a polymer component and a photopolymerization initiator, to prepare a polymerizable syrup; adding sinterable particles to the polymerizable syrup, followed by uniform dispersion of the sinterable particles in the polymerizable syrup; and subjecting the dispersion to photopolymerization (curing) by photoirradiation.

### Advantageous Effects of Invention

According to the present invention, it is possible to provide the convertible pressure-sensitive adhesive agent which allows adherends to be instantly fixed to each other, allows the adherends to be reattached to each other, is excellent in processability such as being able to be cut into a sheet shape, and is not peeled from the adherends even when exposed to a high-temperature atmosphere such as one in a fire. The convertible pressure-sensitive adhesive agent of the present invention preferably has extremely excellent heat resistance.

### Brief Description of Drawings

[FIG. 1] An example of a schematic sectional view of a convertible pressure-sensitive adhesive agent of the present invention.
[FIG. 2] A schematic view of a method of evaluating peeling property in the case of exposure to a high-temperature atmosphere.
[FIG. 3] A schematic view of a method of evaluating high-temperature pressure-sensitive adhesive property and high-temperature adhesive property.

### Description of Embodiments

A convertible pressure-sensitive adhesive agent of the present invention has pressure-sensitive adhesive property before being sintered, and has adhesive property after being sintered. Herein, the convertible pressure-sensitive adhesive agent of the present invention means a convertible pressure-sensitive adhesive agent before being sintered. That is, the convertible pressure-sensitive adhesive agent of the present invention has pressure-sensitive adhesive property as it is, and its adhesive property is expressed by performing sintering.

The term "pressure-sensitive adhesive" as used in the present invention refers to, as defined in JIS, a kind of adhesive property which is temporary and can be exerted by applying only a slight pressure. In addition, the property involves cohesive strength and elasticity, and hence allows peeling from a hard smooth surface while exerting strong adhesive property. A pressure-sensitive adhesive agent is a soft solid, and does not cause a change in state unlike an adhesive agent. The pressure-sensitive adhesive agent wets an adherend and resists peeling while keeping its original state, and hence can instantly exert adhesive strength on a practical level upon attachment of adherends to each other. That is, the pressure-sensitive adhesive agent has liquid property to wet an adherend (fluidity) in combination with solid property to resist peeling (cohesive strength). The pressure-sensitive adhesive agent is a soft solid, and hence its contact area with an adherend gradually increases through the application of a pressure or the passing of time. In addition, the pressure-sensitive adhesive agent can keep the softness for a long time period, and hence has property of allowing peeling to be per formed when the peeling is desired.

The term "adhesive" as used in the present invention refers to, as defined in JIS, property of allowing surfaces of solids of the same kind or different kinds to be attached to each other into integration. An adhesive agent is a liquid having fluidity when adherends are attached to each other, and wets the adherends and conforms thereto. After that, the adhesive agent is converted to a solid by heating or chemical reaction to firmly bond the adherends at their interface and to exert the ability to resist peeling. That is, the adhesive agent wets an adherend as a liquid and exerts adhesive property as a solid.

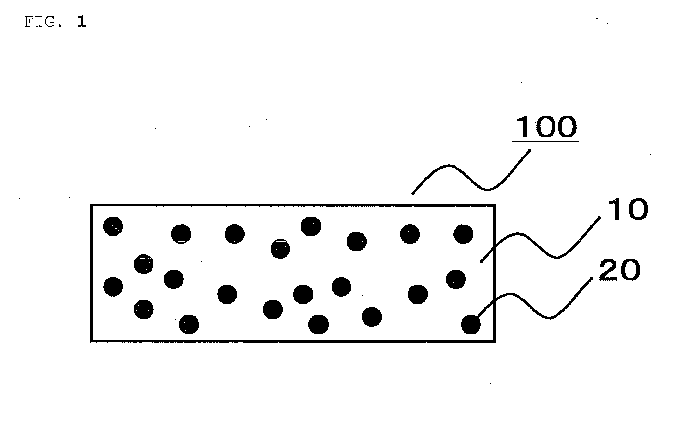

The convertible pressure-sensitive adhesive agent of the present invention contains sinterable particles and a polymer component. FIG. 1 is an example of a schematic sectional view of the convertible pressure-sensitive adhesive agent of the present invention. A convertible pressure-sensitive adhesive agent 100 of the present invention has sinterable particles 20 dispersed in a polymer component 10.

The content ratio of the sinterable particles in the convertible pressure-sensitive adhesive agent of the present invention is preferably 1 wt% to 80 wt%, more preferably 5 wt% to 70wt%, still more preferably 10 wt% to 60 wt%, particularly preferably 20 wt% to 50 wt% with respect to the solid content of the convertible pressure-sensitive adhesive agent. When the content ratio of the sinterable particles in the convertible pressure-sensitive adhesive agent of the present invention falls within the range, there can be sufficiently expressed such an effect that the convertible pressure-sensitive adhesive agent is extremely hardly peeled from an adherend even when exposed to a high-temperature atmosphere such as one in a fire.

The sinterable particles in the convertible pressure-sensitive adhesive agent of the present invention preferably contain two or more kinds of sinterable particles having different deformation points. When the sinterable particles in the convertible pressure-sensitive adhesive agent of the present invention contain two or more kinds of sinterable particles having different deformation points, the convertible pressure-sensitive adhesive agent of the present invention can express extremely excellent heat resistance.

The deformation point of eachof the sinterable particles in the convertible pressure-sensitive adhesive agent of the present invention is preferably 250°C to 800°C, more preferably 250°C to 700 °C, still more preferably 250 °C to 600 °C, particularly preferably 250°C to 500°C. When the deformation point of each of the sinterable particles in the convertible pressure-sensitive adhesive agent of the present invention falls within the range, there can be sufficiently expressed such an effect that the convertible pressure-sensitive adhesive agent is extremely hardly peeled from an adherend even when exposed to a high-temperature atmosphere such as one in a fire.

The deformation point of a sinterable particle having the lowest deformation point among the two or more kinds of sinterable particles having different deformation points is preferably 250°C to 800°C, more preferably 250°C to 700°C, still more preferably 250°C to 600°C, particularly preferably 250°C to 500°C. When the deformation point of the sinterable particle having the lowest deformation point falls within the range, the convertible pressure-sensitive adhesive agent of the present invention can express extremely excellent heat resistance to an additional degree.

Any appropriate sinterable particles may be adopted as the sinterable particles in the convertible pressure-sensitive adhesive agent of the present invention. Such sinterable particles are preferably inorganic particles each having sinterability, more preferably sinterable particles each formed of at least one kind of component selected from silicic acid, boric acid, borosilicic acid, aluminum oxide, calcium oxide, sodium oxide, lithium oxide, and phosphorus oxide. When such sinterable particles are adopted, there can be sufficiently expressed such an effect that the convertible pressure-sensitive adhesive agent is extremely hardly peeled from an adherend even when exposed to a high-temperature atmosphere such as one in a fire.

The average particle diameter of each of the sinterable particles in the convertible pressure-sensitive adhesive agent of the present invention is preferably 0.1µm to 1,000 µm, more preferably 0.5 µm to 500 µm, still more preferably 1 µm to 300 µm, particularly preferably 2 µm to 150 µm. When the average particle diameter of each of the sinterable particles in the convertible pressure-sensitive adhesive agent of the present invention falls within the range, there can be sufficiently expressed such an effect that the convertible pressure-sensitive adhesive agent is extremely hardly peeled from an adherend even when exposed to a high-temperature atmosphere such as one in a fire.

The polymer component in the convertible pressure-sensitive adhesive agent of the present invention preferably contains an antioxidant. When the polymer component in the convertible pressure-sensitive adhesive agent of the present invention contains an antioxidant, the convertible pressure-sensitive adhesive agent of the present invention can express extremely excellent heat resistance.

The content ratio of the antioxidant in the convertible pressure-sensitive adhesive agent of the present invention is preferably 0.1 wt% to 10 wt%, more preferably 0.3 wt% to 8 wt%, still more preferably 0.5 wt% to 6 wt%, particularly preferably 0.7 wt% to 5 wt% with respect to the solid content of the convertible pressure-sensitive adhesive agent. When the content ratio of the antioxidant falls within the range, the convertible pressure-sensitive adhesive agent of the present invention can express extremely excellent heat resistance to an additional degree. The antioxidants may be used alone or in combination.

Any appropriate antioxidant may be adopted as the antioxidant. Such antioxidant is preferably exemplified by at least one kind selected from a phenol-based antioxidant, an amine-based antioxidant, an amino ether-based antioxidant, and a phosphorus-based antioxidant.

Examples of the phenol-based antioxidant may include: monocyclic phenol compounds such as 2,6-di-t-butyl-p-cresol, 2,6-di-t-butyl-4-ethylphenol, 2,6-dicyclohexyl-4-methylphenol, 2,6-diisopropyl-4-ethylphenol, 2,6-di-t-amyl-4-methylphenol, 2,6-di-t-octyl-4-n-propylphenol, 2,6-dicyclohexyl-4-n-octylphenol, 2-isopropyl-4-methyl-6-t-butylphenol, 2-t-butyl-4-ethyl-6-t-octylphenol, 2-isobutyl-4-ethyl-6-t-hexylphenol, 2-cyclohexyl-4-n-butyl-6-isopropylphenol, styrenated mixed cresol, DL-α-tocopherol, and stearyl β-(3,5-di-t-butyl-4-hydroxyphenyl) propionate; bicyclic phenol compounds such as 2,2'-methylenebis(4-methyl-6-t-butylphenol), 4,4'-butylidenebis(3-methyl-6-t-butylphenol), 4,4'-thiobis(3-methyl-6-t-butylphenol), 2,2'-thiobis(4-methyl-6-t-butylphenol), 4,4'-methylenebis(2,6-di-t-butylphenol), 2,2'-methylenebis[6-(1-methylcyclohexyl)-p-cresol], 2,2'-ethylidenebis(4,6-di-t-butylphenol), 2,2'-butylidenebis(2-t-butyl-4-methylphenol), 3,6-dioxaoctamethylenebis[3-(3-t-butyl-4-hydroxy-5-methylpheny 1) propionate], triethylene glycol-bis[3-(3-t-butyl-5-methyl-4-hydroxyphenyl) propionate], 1,6-hexanediolbis[3-(3,5-di-t-butyl-4-hydroxyphenyl) propionate], and 2,2'-thiodiethylenebis[3-(3,5-di-t-butyl-4-hydroxyphenyl) propionate]; tricyclic phenol compounds such as 1,1,3-tris(2-methyl-4-hydroxy-5-t-butylphenyl)butane, 1,3,5-tris(2,6-dimethyl-3-hydroxy-4-t-butylbenzyl) isocyanurate, 1,3,5-tris[(3,5-di-t-butyl-4-hydroxyphenyl)propionyloxyethyl] isocyanurate, tris(4-t-butyl-2,6-dimethyl-3-hydroxybenzyl) isocyanurate, and 1,3,5-trimethyl-2,4,6-tris(3,5-di-t-butyl-4-hydroxybenzyl)benz ene; tetracyclic phenol compounds such as tetrakis[methylene-3-(3,5-di-t-butyl-4-hydroxyphenyl) propionate]methane; and phosphorus-containing phenol compounds such as calcium bis(ethyl 3,5-di-t-butyl-4-hydroxybenzyl phosphonate) and nickel bis(ethyl 3,5-di-t-butyl-4-hydroxybenzyl phosphonate).

Examples of the amine-based antioxidant include bis(2,2,6,6-tetramethyl-4-piperidyl) sebacate, a polycondensate of dimethyl succinate and 1-(2-hydroxyethyl)-4-hydroxy-2,2,6,6-tetramethylpiperidineetha nol, N,N',N",N"'-tetrakis-(4,6-bis-(butyl-(N-methyl-2,2,6,6-tetra methylpiperidin-4-yl)amino)-triazin-2-yl)-4,7-diazadecane-1,10 -diamine, a polycondensate of dibutylamine·1,3,5-triazine·N,N'-bis(2,2,6,6-tetramethyl-4-pip eridyl-1,6-hexamethylenediamine) and N-(2,2,6,6-tetramethyl-4-piperidyl)butylamine, poly[{6-(1,1,3,3-tetramethylbutyl)amino-1,3,5-triazine-2,4-diy 1}{(2,2,6,6-tetramethyl-4-piperidyl)imino}hexamethylene{(2,2,6 ,6-tetramethyl-4-piperidyl)imino}], tetrakis(2,2,6,6-tetramethyl-4-piperidyl)-1,2,3,4-butane tetracarboxylate, 2,2,6,6-tetramethyl-4-piperidyl benzoate, bis-(1,2,6,6-pentamethyl-4-piperidyl)-2-(3,5-di-t-butyl-4-hydr oxybenzyl)-2-n-butyl malonate, bis-(N-methyl-2,2,6,6-tetramethyl-4-piperidyl) sebacate, 1,1'-(1,2-ethanediyl)bis(3,3,5,5-tetramethylpiperazinone), (mixed 2,2,6,6-tetramethyl-4-piperidyl/tridecyl)-1,2,3,4-butane tetracarboxylate, (mixed 1,2,2,6,6-pentamethyl-4-piperidyl/tridecyl)-1,2,3,4-butane tetracarboxylate, mixed [2,2,6,6-tetramethyl-4-piperidyl/β,β,β',β'-tetramethyl-3,9-[2, 4,8,10-tetraoxaspiro(5,5)undecane]diethyl]-1,2,3,4-butane tetracarboxylate, mixed [1,2,2,6,6-pentamethyl-4-piperidyl/β,β,β',β'-tetramethyl-3,9-[ 2,4,8,10-tetraoxaspiro(5,5)undecane]diethyl]-1,2,3,4-butane tetracarboxylate, an N,N'-bis(3-aminopropyl)ethylenediamine-2,4-bis[N-butyl-N-(1,2, 2,6,6-pentamethyl-4-piperidyl)amino]-6-chloro-1,3,5-triazine condensate, poly[6-N-morpholyl-1,3,5-triazine-2,4-diyl][(2,2,6,6-tetrameth yl-4-piperidyl)imino]hexamethylene[(2,2,6,6-tetramethyl-4-pipe ridyl)imide], a condensate of N,N'-bis(2,2,6,6-tetramethyl-4-piperidyl)hexamethylenediamine and 1,2-dibromoethane, and N-(2,2,6,6-tetramethyl-4-piperidyl)-2-methyl.

Examples of the amino ether-based antioxidant include bis(2,2,6,6-tetramethyl-4-piperidyl) sebacate, bis(1,2,2,6,6-pentamethyl-4-piperidyl) sebacate, bis(1-methoxy-2,2,6,6-tetramethyl-4-piperidyl) sebacate, bis(1-ethoxy-2,2,6,6-tetramethyl-4-piperidyl) sebacate, bis(1-propoxy-2,2,6,6-tetramethyl-4-piperidyl) sebacate, bis(1-butoxy-2,2,6,6-tetramethyl-4-piperidyl) sebacate, bis(1-pentyloxy-2,2,6,6-tetramethyl-4-piperidyl) sebacate, bis(1-hexyloxy-2,2,6,6-tetramethyl-4-piperidyl) sebacate, bis(1-heptyloxy-2,2,6,6-tetramethyl-4-piperidyl) sebacate, bis(1-octoxy-2,2,6,6-tetramethyl-4-piperidyl) sebacate, bis(1-nonyloxy-2,2,6,6-tetramethyl-4-piperidyl) sebacate, bis(1-decanyloxy-2,2,6,6-tetramethyl-4-piperidyl) sebacate, and bis(1-dodecyloxy-2,2,6,6-tetramethyl-4-piperidyl) sebacate.

Examples of the phosphorus-based antioxidant include triphenyl phosphite, diphenyl isodecyl phosphite, phenyl diisodecyl phosphite, 4,4'-butylidene-bis(3-methyl-6-t-butylphenylditridecyl) phosphite, cyclic neopentanetetraylbis(nonylphenyl) phosphite, cyclic neopentanetetraylbis(dinonylphenyl) phosphite, cyclic neopentane tetrayltris(nonylphenyl) phosphite, cyclic neopentane tetrayltris(dinonylphenyl) phosphite, 10-(2,5-dihydroxyphenyl)-10H-9-oxa-10-phosphaphenanthrene-10-o xide, diisodecyl pentaerythritol diphosphite, and tris(2,4-di-t-butylphenyl) phosphite.

The polymer component in the convertible pressure-sensitive adhesive agent of the present invention preferably has a cross-linked structure. When the polymer component in the convertible pressure-sensitive adhesive agent of the present invention has a cross-linked structure, the convertible pressure-sensitive adhesive agent of the present invention can express extremely excellent heat resistance.

The cross-linked structure may be constructed by any appropriate method. The cross-linked structure is preferably constructed by incorporating a cross-linking monomer into all monomer components for forming the polymer component. In this case, the content ratio of the cross-linking monomer in all monomer components for forming the polymer component is preferably 2.0 wt% to 60 wt%, more preferably 3.0 wt% to 57 wt%, still more preferably 5.0 wt% to 55 wt%, particularly preferably 7.0 wt% to 53 wt%, most preferably 8.0 wt% to 50 wt%. When the content ratio of the cross-linking monomer falls within the range, the convertible pressure-sensitive adhesive agent of the present invention can express extremely excellent heat resistance to an additional degree.

The cross-linking monomers may be used alone or in combination.

Any appropriate cross-linking monomer may be adopted as the cross-linking monomer as long as the monomer can construct the cross-linked structure. As such cross-linking monomer, there is preferably given a cross-linking monomer having at least one kind of functional group selected from an acryloyl group, an epoxy group, an isocyanate group, a carboxyl group, a hydroxyl group, a vinyl group, and an amino group. Specific examples of such cross-linking monomer include polyfunctional monomers to be described later.

The content ratio of the polymer component in the convertible pressure-sensitive adhesive agent of the present invention is preferably 20 wt% to 99 wt%, more preferably 30 wt% to 95 wt%, still more preferably 40 wt% to 90 wt%, particularly preferably 50 wt% to 80 wt% with respect to the solid content of the convertible pressure-sensitive adhesive agent. When the content ratio of the polymer component in the convertible pressure-sensitive adhesive agent of the present invention falls within the range, there can be sufficiently expressed such an effect that the convertible pressure-sensitive adhesive agent is extremely hardly peeled from an adherend even when exposed to a high-temperature atmosphere such as one in a fire.

Any appropriate polymer component may be adopted as the polymer component in the convertible pressure-sensitive adhesive agent of the present invention as long as the polymer component can express pressure-sensitive adhesive property. Such polymer component is preferably at least one kind of component selected from a rubber-based polymer, a silicone-based polymer, and an acrylic polymer. The polymer components may be used in the convertible pressure-sensitive adhesive agent of the present invention alone or in combination.

Any appropriate rubber-based polymer that can express pressure-sensitive adhesive property may be adopted as the rubber-based polymer.

Any appropriate silicone-based polymer that can express pressure-sensitive adhesive property may be adopted as the silicone-based polymer.

Any appropriate acrylic polymer that can express pressure-sensitive adhesive property may be adopted as the acrylic polymer. The acrylic polymer may be preferably formed from monomer components essentially containing an acrylic monomer. The content ratio of the acrylic monomer in all monomers that may be used for forming the acrylic polymer is preferably 50 wt% to 100 wt%, more preferably 55 wt% to 98 wt%, still more preferably 60 wt% to 95 wt%, particularly preferably 65 wt% to 93 wt%. The acrylic monomers may be used alone or in combination.

A preferred example of the acrylic monomer is an alkyl (meth)acrylate having an alkyl group. The alkyl (meth)acrylates each having an alkyl group may be used alone or in combination. It should be noted that the term "(meth)acryl" refers to "acryl" and/or "methacryl."

Examples of the alkyl (meth)acrylate having an alkyl group include an alkyl (meth) acrylate having a linear or branched alkyl group, and an alkyl (meth) acrylate having a cyclic alkyl group. It should be noted that the alkyl (meth)acrylate as used herein means a monofunctional alkyl (meth)acrylate.

Examples of the alkyl (meth)acrylate having a linear or branched alkyl group include alkyl (meth)acrylates each having an alkyl group having 1 to 20 carbon atoms such as methyl (meth)acrylate, ethyl meth(acrylate), propyl (meth) acrylate, isopropyl (meth)acrylate, butyl (meth)acrylate, isobutyl (meth)acrylate, sec-butyl (meth)acrylate, tert-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth) acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Of those, an alkyl (meth) acrylate having an alkyl group having 2 to 14 carbon atoms is preferred, and an alkyl (meth)acrylate having an alkyl group having 2 to 10 carbon atoms is more preferred.

Examples of the alkyl (meth)acrylate having a cyclic alkyl group include cyclopentyl (meth)acrylate, cyclohexyl (meth)acrylate, and isobornyl (meth)acrylate.

A polyfunctional monomer may be used as a monomer component that can form the acrylic polymer. Any appropriate polyfunctional monomer may be adopted as the polyfunctional monomer. When the polyfunctional monomer is adopted, a cross-linked structure can be imparted to the acrylic polymer. The polyfunctional monomers may be used alone or in combination.

Examples of the polyfunctional monomer include 1,9-nonanedioldi(meth)acrylate, 1,6-hexanedioldi(meth)acrylate, 1,4-butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri (meth) acrylate, tetramethylolmethane tri(meth)acrylate, allyl (meth)acrylate, vinyl (meth)acrylate, divinylbenzene, epoxy acrylate, polyester acrylate, urethane acrylate, 4-hydroxybutyl acrylate glycidyl ether, glycidyl (meth)acrylate, 2-hydroxyethyl (meth)acrylate, 2-hydroxypropyl (meth)acrylate, butanediol (meth)acrylate, 2-hydroxyethyl (meth)acrylate, 4-hydroxybutyl (meth)acrylate, 2-isocyanatoethyl acrylate glycidyl ether, isocyanatoethyl (meth)acrylate, isocyanato (meth)acrylate, triglycidyl isocyanurate, (meth)acrylic acid, phthalic acid monohydroxyethyl (meth)acrylate, hexahydrophthalic acid monohydroxyethyl (meth)acrylate, 2-hydroxyethyl (meth)acrylate, 2-hydroxypropyl (meth)acrylate, 4-hydroxybutyl (meth)acrylate, dimethyl (meth)acrylamide, diethyl (meth)acrylamide, isopropyl (meth)acrylamide, hydroxyethyl (meth)acrylamide, 1,4-butanediol diglycidyl ether, 1,2-ethanediol diglycidyl ether, polyethylene glycol diglycidyl ether, neopentyl glycol diglycidyl ether, trimethylolpropane polyglycidyl ether, hexamethylene diisocyanate, tolylene diisocyanate, diphenylmethane diisocyanate, triphenylmethane triisocyanate, methyltriisocyanatosilane, tetraisocyanatosilane, polyisocyanate, oxalic acid, malonic acid, succinic acid, glutaric acid, adipic acid, pimelic acid, suberic acid, azelaic acid, sebacic acid, phthalic acid, isophthalic acid, 1,2,3-propanetricarboxylic acid, ethylene glycol, diethylene glycol, propylene glycol, dipropylene glycol, neopentyl glycol, 1,4-butanediol, 1,6-hexanediol, 3-methyl-1,5-pentanediol, 1,2,4-butanetriol, polyoxypropylenetriol, trimethylolethane, trimethylolpropane, aminomethanol, 2-aminoethanol, 3-amino-1-propanol, diethanolamine, triethanolamine, N,N-di-n-butylethanolamine, ethylenediamine, hexamethylenediamine, tolylenediamine, hydrogenated tolylenediamine, diphenylmethanediamine, hydrogenated diphenylmethanediamine, tolidineamine, naphthalenediamine, isophoronediamine, xylenediamine, hydrogenated xylenediamine, vinylamine, 2-(2-thienyl)vinylamine, 1-(allyloxy)vinylamine, allyl alcohol, 1,3-butadiene monoepoxide, and 1-vinyl-3,4-epoxycyclohexane. Of those, from the viewpoint of high reactivity, an acrylate-based polyfunctional monomer is preferred, and 1,9-nonanediol di(meth)acrylate, 1,6-hexanediol di(meth)acrylate, and 4-hydroxybutyl acrylate glycidyl ether are more preferred.

A polar group-containing monomer may be used as a monomer component that can form the acrylic polymer. Any appropriate polar group-containing monomer may be adopted as the polar group-containing monomer. When the polar group-containing monomer is adopted, the cohesive strength of the acrylic polymer can be improved, or the pressure-sensitive adhesive strength of the acrylic polymer can be improved. The polar group-containing monomers may be used alone or in combination.

Examples of the polar group-containing monomer include: carboxyl group-containing monomers such as (meth)acrylic acid, itaconic acid, maleic acid, fumaric acid, crotonic acid, and isocrotonic acid, or anhydrides thereof (for example, maleic anhydride);hydroxy group-containing monomers such as a hydroxyalkyl (meth)acrylate such as hydroxyethyl (meth)acrylate, hydroxypropyl (meth) acrylate, or hydroxybutyl (meth) acrylate, vinyl alcohol, and allyl alcohol; amide group-containing monomers such as (meth)acrylamide, N,N-dimethyl (meth)acrylamide, N-methylol (meth)acrylamide, N-methoxymethyl (meth)acrylamide, and N-butoxymethyl (meth)acrylamide; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth)acrylate; cyano group-containing monomers such as acrylonitrile and methacrylonitrile; heterocycle-containing vinyl-based monomers such as N-vinyl-2-pyrrolidone and (meth)acryloyl morpholine, as well as N-vinylpyridine, N-vinylpiperidone, N-vinylpyrimidine, N-vinylpiperazine, N-vinylpyrrole, N-vinylimidazole, and N-vinyloxazole; alkoxyalkyl (meth) acrylate-based monomers such as methoxyethyl (meth)acrylate and ethoxyethyl (meth)acrylate; sulfonate group-containing monomers such as sodium vinyl sulfonate; phosphate group-containing monomers such as 2-hydroxyethyl acryloyl phosphate; imide group-containing monomers such as cyclohexyl maleimide and isopropyl maleimide; and isocyanate group-containing monomers such as 2-methacryloyloxyethyl isocyanate. The polar group-containing monomer is preferably a carboxyl group-containing monomer or an anhydride thereof, more preferably acrylic acid.

Any other copolymerizable monomer may be used as a monomer component that can form the acrylic polymer. Any appropriate other copolymerizable monomer may be adopted as the other copolymerizable monomer. When the other copolymerizable monomer is adopted, the cohesive strength of the acrylic polymer can be improved, or the pressure-sensitive adhesive strength of the acrylic polymer can be improved. The other copolymerizable monomers may be used alone or in combination.

Examples of the other copolymerizable monomer include: alkyl (meth)acrylates such as a (meth)acrylate having an aromatic hydrocarbon group such as phenyl (meth) acrylate; vinyl esters such as vinyl acetate and vinyl propionate; aromatic vinyl compounds such as styrene and vinyl toluene; olefins or dienes such as ethylene, butadiene, isoprene, and isobutylene; vinyl ethers such as a vinyl alkyl ether; vinyl chloride; alkoxyalkyl (meth)acrylate-based monomers such as methoxyethyl (meth)acrylate and ethoxyethyl (meth) acrylate; sulfonate group-containing monomers such as sodium vinyl sulfonate; phosphate group-containing monomers such as 2-hydroxyethyl acryloyl phosphate; imide group-containing monomers such as cyclohexylmaleimide and isopropylmaleimide; isocyanate group-containing monomers such as 2-methacryloyloxyethyl isocyanate; fluorine atom-containing (meth)acrylates; and silicon atom-containing (meth)acrylates.

The weight-average molecular weight of the acrylic polymer is preferably 300,000 or more, more preferably 400,000 to 3,000,000. The weight-average molecular weight of the acrylic polymer may be determined by a gel permeation chromatography method (GPC method).

The convertible pressure-sensitive adhesive agent of the present invention may contain any appropriate other component except the antioxidant in addition to the sinterable particles and the polymer component as long as the effects of the present invention are not impaired. Such other components may be contained alone or in combination.

Examples of the other component include other polymer components, a softening agent, an age resistor, a curing agent, a plasticizer, a filler, a thermal polymerization initiator, a photopolymerization initiator, a UV absorbing agent, a light stabilizing agent, a coloring agent (e.g., a pigment or a dye), a solvent (organic solvent), a surfactant (e. g. , an ionic surfactant, a silicone-based surfactant, or a fluorine-based surfactant), and a cross-linking agent (e.g., a polyisocyanate-based cross-linking agent, a silicone-based cross-linking agent, an epoxy-based cross-linking agent, or an alkyl etherified melamine-based cross-linking agent). It should be noted that the thermal polymerization initiator or the photopolymerization initiator may be contained in a material for forming the polymer component.

Any appropriate thermal polymerization initiator may be adopted as the thermal polymerization initiator. Examples of such thermal polymerization initiator include: peroxide-based polymerization initiators such as hydrogen peroxide, benzoyl peroxide, and t-butyl peroxide; and azo-based polymerization initiators such as 2,2'-azobis-2-methylpropionamidine acid salts, 2,2'-azobis-2,4-dimethylvaleronitrile, 2,2'-azobis-N,N'-dimethyleneisobutylamidine acid salts, 2,2'-azobisisobutyronitrile, and 2,2'-azobis-2-methyl-N-(2-hydroxyethyl)propionamide. The thermal polymerization initiators maybe used alone or in combination. Further, such thermal polymerization initiator may be used as a redox-type polymerization initiator by being used in combination with a reducing agent. Examples of such reducing agent include: ionic salts such as a sulfite, a hydrogensulfite, and iron, copper, and cobalt salts; amines such as triethanolamine; and reducing sugars such as an aldose and a ketose.

The content ratio of the thermal polymerization initiator in the convertible pressure-sensitive adhesive agent of the present invention is preferably 5 parts by weight or less, more preferably 0.01 part by weight to 5 parts by weight, still more preferably 0.05 part by weight to 3 parts by weight with respect to the monomer components to be used for forming the polymer component of the convertible pressure-sensitive adhesive agent.

Any appropriate photopolymerization initiator may be adopted as the photopolymerization initiator. Examples of such photopolymerization initiator include a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, and a thioxanthone-based photopolymerization initiator. The photopolymerization initiators may be used alone or in combination.

An example of the ketal-based photopolymerization initiator is 2,2-dimethoxy-1,2-diphenylethan-1-one (such as "Irgacure 651" (trade name; manufactured by Ciba Speciality Chemicals Inc.)). Examples of the acetophenone-based photopolymerization initiator include 1-hydroxycyclohexyl phenyl ketone (such as "Irgacure 184" (trade name; manufactured by Ciba Speciality Chemicals Inc.)), 2,2-diethoxyacetophenone, 2,2-dimethoxy-2-phenylacetophenone, 4-phenoxydichloroacetophenone, and 4-(t-butyl)dichloroacetophenone. Examples of the benzoin ether-based photopolymerization initiator include benzoin methyl ether, benzoin ethyl ether, benzoin propyl ether, benzoin isopropyl ether, and benzoin isobutyl ether. An example of the acylphosphine oxide-based photopolymerization initiator is "Lucirin TPO" (trade name; manufactured by BASF). Examples of the α-ketol-based photopolymerization initiator include 2-methyl-2-hydroxy propiophenone and 1-[4-(2-hydroxyethyl)phenyl]-2-methylpropan-1-one. An example of the aromatic sulfonyl chloride-based photopolymerization initiator is 2-naphthalenesulfonyl chloride. An example of the photoactive oxime-based photopolymerization initiator is 1-phenyl-1,1-propanedione-2-(o-ethoxycarbonyl)-oxime. Examples of the benzoin-based photopolymerization initiator include benzoin. An example of the benzyl-based photopolymerization initiator is benzil. Examples of the benzophenone-based photopolymerization initiator include benzophenone, benzoylbenzoic acid, 3,3'-dimethyl-4-methoxybenzophenone, polyvinyl benzophenone, and α-hydroxycyclohexyl phenyl ketone. Examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

The content ratio of the photopolymerization initiator in the convertible pressure-sensitive adhesive agent of the present invention is preferably 5 parts by weight or less, more preferably 0.01 part by weight to 5 parts by weight, still more preferably 0.05 part by weight to 3 parts by weight with respect to the monomer components to be used for forming the polymer component in the convertible pressure-sensitive adhesive agent.

The convertible pressure-sensitive adhesive agent of the present invention has pressure-sensitive adhesive property before being sintered. Before being sintered, the convertible pressure-sensitive adhesive agent of the present invention has a pressure-sensitive adhesive strength for a stainless-steel plate at a peel rate of 50 mm/min, a peel angle of 180°, and 23°C of preferably 0.1 N/10 mm to 15 N/10 mm, more preferably 0.5 N/10 mm to 10 N/10 mm, still more preferably 1 N/10 mm to 8 N/10 mm, particularly preferably 2 N/10 mm to 6 N/10 mm. When the pressure-sensitive adhesive strength falls within the range, the following appropriate pressure-sensitive adhesive property can be expressed: the convertible pressure-sensitive adhesive agent allows adherends to be instantly fixed to each other, allows the adherends tobe reattached to each other, and is excellent in processability such as being able to be cut into a sheet shape. A specific method of measuring the pressure-sensitive adhesive strength is described later.

The convertible pressure-sensitive adhesive agent of the present invention has sinterability. Any appropriate temperature may be adopted as a sintering temperature depending on the kind and amount of the sinterable particles contained in the convertible pressure-sensitive adhesive agent of the present invention.

The convertible pressure-sensitive adhesive agent of the present invention may adopt any appropriate form. Examples of the form of the convertible pressure-sensitive adhesive agent of the present invention include a sheet shape and a tape shape. When the form of the convertible pressure-sensitive adhesive agent of the present invention is a sheet shape, the convertible pressure-sensitive adhesive agent may be used as a convertible pressure-sensitive adhesive agent sheet. The convertible pressure-sensitive adhesive agent of the present invention may have such a form that a sheet-shaped or tape-shaped convertible pressure-sensitive adhesive agent is wound into a roll shape. In addition, the convertible pressure-sensitive adhesive agent of the present invention may have such a form that sheet-shaped or tape-shaped convertible pressure-sensitive adhesive agents are laminated to each other.

In the case where the convertible pressure-sensitive adhesive agent of the present invention has a sheet shape, its thickness is preferably 1 µm to 1,000 µm, more preferably 5 µm to 500 µm, still more preferably 10 µm to 300 µm, particularly preferably 20 µm to 200 µm. When the thickness in the case where the convertible pressure-sensitive adhesive agent of the present invention has a sheet shape falls within the range, the convertible pressure-sensitive adhesive agent sheet is excellent in handleability.

The convertible pressure-sensitive adhesive agent of the present invention may be produced by any appropriate method as long as the production method can provide a convertible pressure-sensitive adhesive agent containing the sinterable particles and the polymer component.

As a preferred production method for the convertible pressure-sensitive adhesive agent of the present invention, there is given, for example, a method involving: partially polymerizing a polymerizable composition, which contains the monomer components to be used for forming the polymer component and any appropriate photopolymerization initiator, to prepare a polymerizable syrup; adding the sinterable particles to the polymerizable syrup, followed by uniform dispersion of the sinterable particles in the polymerizable syrup; then applying the dispersion onto any appropriate backing (such as a separator); and subjecting the resultant to photopolymerization (curing) by photoirradiation.

Any appropriate condition may be adopted as a condition for the photoirradiation, such as a light source, irradiation energy, an irradiation method, or an irradiation time.

An active energy ray to be used in the photoirradiation is, for example, an ionizing radiation such as an α-ray, a β-ray, a γ-ray, a neutron beam, or an electron beam, or UV light. Of those, UV light is preferred.

Irradiation with the active energy ray is performed by using, for example, a black-light lamp, a chemical lamp, a high-pressure mercury lamp, or a metal halide lamp.

Heating may be performed in the polymerization. Any appropriate heating method may be adopted as a heating method. Examples of the heating method include a heating method involving using an electrothermal heater and a heating method involving using an electromagnetic wave such as an infrared ray.

### Examples

Hereinafter, the present invention is described in more detail by way of examples, but the present invention is not limited to these examples.

It should be noted that a biaxially stretched polyethylene terephthalate film having a thickness of 38 µm (trade name: "MRN38," manufactured by Mitsubishi Chemical Polyester Film) one surface of which had been subjected to silicone-based release treatment was used as each of a separator and a cover separator used in the following respective examples.

### <Evaluation for pressure-sensitive adhesive property>

### (Evaluation in Examples 1 to 6 and Comparative Examples 1 to 3)

A sample having a width of 10 mm was crimped onto a standard stainless-steel plate with a 2-kg rubber roller while the roller was rolled in a reciprocating manner once at a speed of 300 mm/min. After 30 minutes from the crimp, the sample was evaluated for its pressure-sensitive adhesive strength by being pulled with a tensile tester at 23°C and a rate of pulling (peel rate) of 50 mm/min in a direction of 180°.

### (Evaluation in Examples 7 to 16 and Comparative Examples 4 to 10)

A sample having a width of 25 mm was crimped onto a standard glass plate with a 2-kg rubber roller while the roller was rolled in a reciprocating manner once at a speed of 300 mm/min. After 24 hours from the crimp, the sample was evaluated for its pressure-sensitive adhesive strength by being pulled with a tensile tester at 23°C and a rate of pulling (peel rate) of 300 mm/min in a direction of 180°.

### <Check for peeling (evaluation for adhesive property after sintering)>

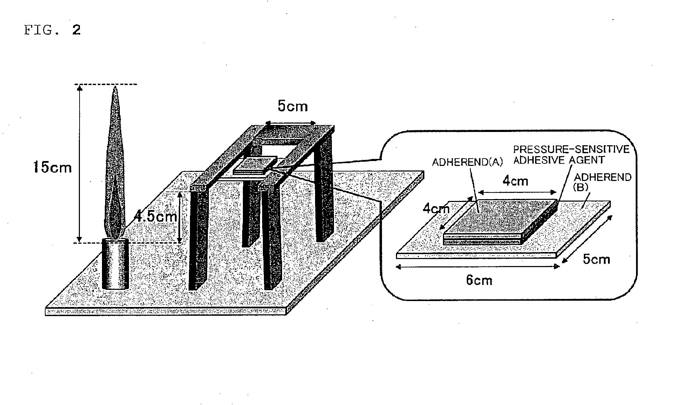

As illustrated in FIG. **2**, each of convertible pressure-sensitive adhesive agents obtained in Examples and Comparative Examples was attached to an adherend (**A**) having a rectangular shape of 40 mm by 40 mm, and further attached to the central region of an adherend (**B**) having a rectangular shape of 50 mm by 60 mm to produce a laminate (L). The laminate (L) was fixed so that the adherend (**B**) served as the lower surface and the laminate (L) was horizontal with respect to the test stand. The flame of a gas burner using a propane gas was adjusted to a luminous flame (orange flame), and the flame was adjusted so as to have a height of 150 mm. The gas burner was placed below the laminate so that the flame was brought into contact with the central portion of the adherend (**B**), and the test was continued for 3 minutes. After the test, evaluation was made on whether or not the adherend (**A**) and the adherend (**B**) were peeled off when the sample returned to normal temperature. Thelaminate (L) afterthetestwasallowedtofree-fall onto a separately prepared glass plate from 5 cm above the plate in a perpendicular direction, and then a case where the adherend (**A**) and the adherend (**B**) were not peeled off was represented by symbol "o", and a case where at least one of the adherends was peeled off was represented by symbol "×".
The following combinations of the adherend (**A**) and the adherend (**B**) were adopted.
(1) adherend (**A**): glass (1 mm), adherend (**B**): glass (1 mm)
(2) adherend (**A**): glass (1 mm), adherend (**B**): aluminum (0.5 mm)
(3) adherend (**A**): aluminum (0.5 mm), adherend (**B**): aluminum (0.5 mm)
(4) adherend (**A**) : glass cloth (0.1 mm), adherend (**B**) : aluminum (0.5 mm)

### <Evaluations for high-temperature pressure-sensitive adhesive property and high-temperature adhesive property>

### (High-temperature pressure-sensitive adhesive property test*1)

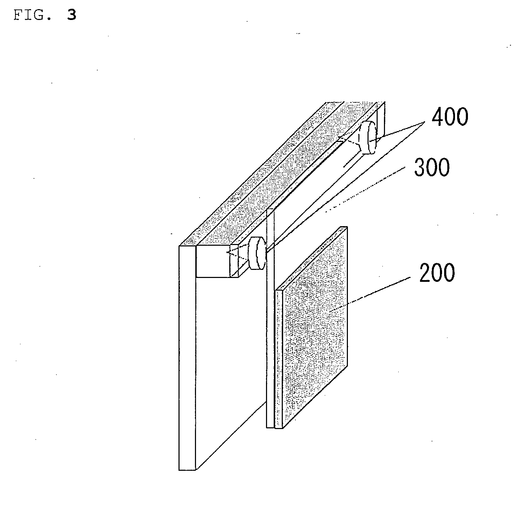

Each of the convertible pressure-sensitive adhesive agents obtained in Examples and Comparative Examples was cut into a piece measuring 30 mm by 50 mm, which was attached to a glass plate measuring 30 mm by 30 mm to a produce a test body in which the convertible pressure-sensitive adhesive agent stuck out from the glass plate by 20 mm. As illustrated in FIG. 3, the test body was attached to a stainless-steel jig, and was further fixed between stainless-steel plates with screws for fixation.
The test body fixed to the jig was put into an electric furnace held at 200°C, and left at rest under a high-temperature atmosphere under the condition of a rate of temperature increase of 15°C/min for 10 minutes. After that, the test body was taken out, and the pressure-sensitive adhesive state of the test body and the glass plate was visually observed. Then, evaluation was made by marking a case where the test body and the glass plate were not peeled from each other with symbol "○", marking a case where the test body was peeled from less than a half of the glass plate with symbol "Δ", and a case where the test body was peeled from a half or more of the glass plate with symbol "×".

### (High-temperature adhesive property test*2)

A test body was produced with each of the convertible pressure-sensitive adhesive agents obtained in Examples and Comparative Examples and was fixed to a jig in the same manner as in the high-temperature pressure-sensitive adhesive property test*1. After that, the test body was put into an electric furnace held at 700°C, and left at rest under a high-temperature atmosphere under the condition of a rate of temperature increase of 20°C/min for 10 minutes. After that, the test body was taken out, and the adhesive state of the test body and the glass plate was visually observed. Then, evaluation was made by marking a case where the test body and the glass plate were not peeled from each other with symbol "○", and marking a case where the test body and the glass plate were peeled from each other with symbol "×".

### (High-temperature adhesive property test*3)

Each of the convertible pressure-sensitive adhesive agents obtained in Examples and Comparative Examples was cut into a piece measuring 30 mm by 50 mm, which was attached to a glass plate measuring 30 mm by 30 mm to a produce a test body in which the convertible pressure-sensitive adhesive agent stuck out from the glass plate by 20 mm. As illustrated in FIG. 3, the test body was attached to a stainless-steel jig, and was further fixed between stainless-steel plates with screws for fixation.
The test body fixed to the jig was put into an electric furnace held at 500°C or 700°C, and left at rest under a high-temperature atmosphere under the condition of a rate of temperature increase of 20°C/min for 10 minutes. After that, the test body was taken out, and the adhesive state of the test body and the glass plate was visually observed. Then, evaluation was made by marking a case where the test body and the glass plate were not peeled from each other with symbol "○", and marking a case where the test body and the glass plate were peeled from each other with symbol "×".

### (Synthesis Example 1) (Preparation of photopolymerizable syrup (A))

As the monomer component, 90 parts by weight of 2-ethylhexyl acrylate and 10 parts by weight of acrylic acid as monomer components, 0.05 part by weight of a photopolymerization initiator (trade name: "IRGACURE 651," manufactured by BASF), and 0.05 part by weight of a photopolymerization initiator (trade name: "IRGACURE 184," manufactured by BASF) were stirred in a four-necked separable flask provided with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a photopolymerizable syrup (**A**) having a rate of polymerization of 3.5% part of which had been polymerized was prepared.

### (Example 1)

0.1 Part by weight of 1,6-hexanediol diacrylate (HDDA) and 50 parts by weight of phosphoric acid-based frit (manufactured by TAKARA STANDARD CO., LTD., VY0144, deformation point: 397°C, average particle diameter: 10 µm) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 50 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (1) having a sheet shape with a thickness of 50 µm was produced.
The resultant convertible pressure-sensitive adhesive agent (1) was cut into a piece having a rectangular shape of 40 mm by 40 mm, which was evaluated. Table 1 shows the results.

### (Example 2)

0.1 Part by weight of 1,6-hexanediol diacrylate (HDDA) and 50 parts by weight of porcelain enamel frit (manufactured by TAKARA STANDARD CO., LTD., CY0098M1, deformation point: about 500°C, average particle diameter: 10 µm) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 50 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (2) having a sheet shape with a thickness of 50 µm was produced.
The resultant convertible pressure-sensitive adhesive agent (2) was cut into a piece having a rectangular shape of 40 mm by 40 mm, which was evaluated. Table 1 shows the results.

### (Example 3)

0.1 Part by weight of 1,6-hexanediol diacrylate (HDDA) and 50 parts by weight of phosphoric acid-based frit (manufactured by TAKARA STANDARD CO., LTD., deformation point: 397°C, average particle diameter: 3 µm) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 50 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (3) having a sheet shape with a thickness of 50 µm was produced.
The resultant convertible pressure-sensitive adhesive agent (3) was cut into a piece having a rectangular shape of 40 mm by 40 mm, which was evaluated. Table 1 shows the results.

### (Example 4)

0.1 Part by weight of 1,6-hexanediol diacrylate (HDDA) and 20 parts by weight of phosphoric acid-based frit (manufactured by TAKARASTANDARDCO., LTD., VY0144, deformation point: 397°C, average particle diameter: 10 µm) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 50 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (4) having a sheet shape with a thickness of 50 µm was produced.
The resultant convertible pressure-sensitive adhesive agent (4) was cut into a piece having a rectangular shape of 40 mm by 40 mm, which was evaluated. Table 1 shows the results.

### (Example 5)

50 Parts by weight of phosphoric acid-based frit (manufactured by TAKARA STANDARD CO., LTD., VY0144, deformation point: 397°C, average particle diameter: 10 µm) were added to 100 parts by weight of a silicone-based pressure-sensitive adhesive agent (manufactured by Dow Corning Toray Co., Ltd., SD-4585), and were uniformly dispersed therein with a disper. The resultant dispersion was applied onto the peel-treated surface of a separator so as to have a thickness of 50 µm, followed by drying for fixation. Thus, a convertible pressure-sensitive adhesive agent (5) having a sheet shape with a thickness of 50 µm was produced.
The resultant convertible pressure-sensitive adhesive agent (5) was cut into a piece having a rectangular shape of 40 mm by 40 mm, which was evaluated. Table 1 shows the results.

### (Example 6)

0.1 Part by weight of 1,6-hexanediol diacrylate (HDDA) and 50 parts by weight of phosphoric acid-based frit (manufactured by TAKARA-STANDARD CO., LTD., VY0144, deformation point: 397°C, average particle diameter: 10 µm) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 200 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (6) having a sheet shape with a thickness of 200 µm was produced.
The resultant convertible pressure-sensitive adhesive agent (6) was cut into a piece having a rectangular shape of 40 mm by 40 mm, which was evaluated. Table 1 shows the results.

### (Comparative Example 1)

0.1 Part by weight of 1,6-hexanediol diacrylate (HDDA) was added to 100 parts by weight of the photopolymerizable syrup (**A**) obtained in Synthesis Example 1, and the mixture was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (C1) having a sheet shape with a thickness of 50 µm was produced.
The resultant convertible pressure-sensitive adhesive agent (C1) was cut into a piece having a rectangular shape of 40 mm by 40 mm, which was evaluated. Table 1 shows the results.

### (Comparative Example 2)

0.1 Part by weight of 1,6-hexanediol diacrylate (HDDA) and 50 parts by weight of organic fine particles (manufactured by Soken Chemical & Engineering Co., Ltd., MX-1000, average particle diameter: 10 µm) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 50 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (C2) having a sheet shape with a thickness of 50 µm was produced.
The resultant convertible pressure-sensitive adhesive agent (C2) was cut into a piece having a rectangular shape of 40 mm by 40 mm, which was evaluated. Table 1 shows the results.

### (Comparative Example 3)

50 Parts by weight of phosphoric acid-based frit (manufactured by TAKARA STANDARD CO., LTD., VY0144, deformation point: 397°C, average particle diameter: 10 µm) were added to 100 parts by weight of toluene, and were uniformly dispersed therein with a disper. The resultant dispersion was applied onto the peel-treated surface of a separator so as to have a thickness of 50 µm, followed by drying. Thus, a sheet having a thickness of about 10 µm was produced.
The resultant sheet did not show pressure-sensitive adhesive property, and hence was unable to be subjected to the subsequent evaluation.

**[Table 1]**

| | Deformation point | Particle diameter | Addition amount of particles | Polymer component | Sheet thickness | Pressure-sensitive adhesive strength | (Evaluation 1) | | | | |
|---|---|---|---|---|---|---|---|---|---|---|---|
| | [°C] | [µm] | [Parts by weight] | | [µm] | [N/10 mm] | Adherend (A) | Glass | Glass | Aluminum | Glass cloth |
| | | | | | | | Adherend (B) | Glass | Aluminum | Aluminum | Aluminum |
| Example 1 | 397 | 10 | 50 | Syrup (**A**) | 50 | 3.2 | | ○ | ○ | ○ | ○ |
| Example 2 | 500 | 10 | 50 | Syrup (**A**) | 50 | 3.6 | | ○ | ○ | ○ | ○ |
| Example 3 | 397 | 3 | 50 | Syrup (**A**) | 50 | 2.9 | | ○ | ○ | ○ | ○ |
| Example 4 | 397 | 10 | 20 | Syrup (**A**) | 50 | 4.1 | | ○ | ○ | ○ | ○ |
| Example 5 | 397 | 10 | 50 | Silicone | 50 | 2.1 | | ○ | ○ | ○ | ○ |
| Example 6 | 397 | 10 | 50 | Syrup (**A**) | 200 | 3.7 | | ○ | ○ | ○ | ○ |
| Comparative example 1 | - | - | - | Syrup (**A**) | 50 | 6.4 | | × | × | × | × |
| Comparative example 2 | - | 10 | 50 | Syrup (**A**) | 50 | 3.3 | | × | × | × | × |
| Comparative example 3 | 397 | 10 | 50 | - | 10 | - | | × | × | × | × |

As apparent from Table 1, each of the convertible pressure-sensitive adhesive agents obtained in Examples allows adherends to be instantly fixed to each other, allows the adherends to be reattached to each other, is excellent in processability such as being able to be cut into a sheet shape, and is not peeled from the adherends even when exposed to a high-temperature atmosphere such as one in a fire.

### (Synthesis Example 2) (Preparation of photopolymerizable syrup (B))

90 Parts by weight of 2-ethylhexyl acrylate and 10 parts by weight of acrylic acid as monomer components, 0.05 part by weight of a photopolymerization initiator (trade name: "IRGACURE 651," manufactured by BASF), and 0.05 part by weight of a photopolymerization initiator (trade name: "IRGACURE 184," manufactured by BASF) were stirred in a four-necked separable flask provided with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a photopolymerizable syrup (B) as a composition having a rate of polymerization of 7% part of which had been polymerized was prepared.

### (Example 7)

0.1 Part by weight of 1,6-hexanediol diacrylate (HDDA), 10 parts by weight of 4-hydroxybutyl acrylate glycidyl ether (4HBAGE), and 50 parts by weight of glass powder (manufactured by TAKARA STANDARD CO., LTD., VY-0114M2, deformation point: 397°C, average particle diameter: 10 µm) were added to 100 parts by weight of the photopolymerizable syrup (**B**) obtained in Synthesis Example 2, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (7) having a sheet shape with a thickness of 100 µm was produced.
The resultant convertible pressure-sensitive adhesive agent (7) was evaluated. Table 2 shows the results.

### (Example 8)

0.1 Part by weight of 1,6-hexanediol diacrylate (HDDA), 50 parts by weight of 4-hydroxybutyl acrylate glycidyl ether (4HBAGE), and 50 parts by weight of glass powder (manufactured by TAKARA STANDARD CO., LTD., VY-0114M2, deformation point: 397°C, average particle diameter: 10 µm) were added to 100 parts by weight of the photopolymerizable syrup (**B**) obtained in Synthesis Example 2, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (8) having a sheet shape with a thickness of 100 µm was produced.
The resultant convertible pressure-sensitive adhesive agent (8) was evaluated. Table 2 shows the results.

### (Example 9)

0.1 Part by weight of 1,6-hexanediol diacrylate (HDDA), 3 parts by weight of urethane acrylate (manufactured by DAICEL-CYTEC Company, LTD., EBECRYL9260), and 50 parts by weight of glass powder (manufactured by TAKARA STANDARD CO., LTD., VY-0114M2, deformation point: 397°C, average particle diameter: 10 µm) were added to 100 parts by weight of the photopolymerizable syrup (**B**) obtained in Synthesis Example 2, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (9) having a sheet shape with a thickness of 100 µm was produced.
The resultant convertible pressure-sensitive adhesive agent (9) was evaluated. Table 2 shows the results.

### (Example 10)

0.1 Part by weight of 1,6-hexanediol diacrylate (HDDA), 10 parts by weight of 4-hydroxybutyl acrylate glycidyl ether (4HBAGE), and 50 parts by weight of glass powder (manufactured by TAKARA STANDARD CO., LTD., VY-0114M2, deformation point: 397°C, average particle diameter: 10 µm) were added to 100 parts by weight of the photopolymerizable syrup (**B**) obtained in Synthesis Example 2, and were uniformly dispersed therein with a disper. The resultant dispersion was applied onto the peel-treated surface of a separator so as to have a thickness of 100 µm. A glass cloth (manufactured by UNITIKA LTD., E10T-4W, thickness: 100 µm) was placed on the resultant applied surface, a cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (10) with a backing, having a sheet shape with a thickness of 200 µm (convertible pressure-sensitive adhesive agent layer: 100 µm, glass cloth: 100 µm), was produced.
The resultant convertible pressure-sensitive adhesive agent (10) was evaluated. Table 2 shows the results.

### (Comparative Example 4)

0.1 Part by weight of 1,6-hexanediol diacrylate (HDDA) and 50 parts by weight of glass powder (manufactured by TAKARA STANDARD CO., LTD., VY-0114M2, deformation point: 397°C, average particle diameter: 10 µm) were added to 100 parts by weight of the photopolymerizable syrup (**B**) obtained in Synthesis Example 2, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (C4) having a sheet shape with a thickness of 100 µm was produced.
The resultant convertible pressure-sensitive adhesive agent (C4) was evaluated. Table 2 shows the results.

### (Comparative Example 5)

0.1 Part by weight of 1, 6-hexanediol diacrylate (HDDA), 1 part by weight of urethane acrylate (manufactured by DAICEL-CYTEC Company, LTD., EBECRYL9260), and 50 parts by weight of glass powder (manufactured by TAKARA STANDARD CO., LTD., VY-0114M2, deformation point: 397°C, average particle diameter: 10 µm) were added to 100 parts by weight of the photopolymerizable syrup (**B**) obtained in Synthesis Example 2, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (C5) having a sheet shape with a thickness of 100 µm was produced.
The resultant convertible pressure-sensitive adhesive agent (C5) was evaluated. Table 2 shows the results.

### (Comparative Example 6)

0.1 Part by weight of 1,6-hexanediol diacrylate (HDDA) and 50 parts by weight of glass powder (manufactured by TAKARA STANDARD CO., LTD., VY-0114M2, deformation point: 397°C, average particle diameter: 10 µm) were added to 100 parts by weight of the photopolymerizable syrup (**B**) obtained in Synthesis Example 2, and were uniformly dispersed therein with a disper. The resultant dispersion was applied onto the peel-treated surface of a separator so as to have a thickness of 100 µm. A glass cloth (manufactured by UNITIKA LTD., E10T-4W, thickness: 100 µm) was placed on the resultant applied surface, a cover separator was attached thereto, and the resultant was irradiated with UV light (illuminance: 5mW/cm²) by using a black-light lamp as a light source for 5 minutes to cure the applied layer. Thus, a convertible pressure-sensitive adhesive agent (C6) with a backing, having a sheet shape with a thickness of 200 µm (convertible pressure-sensitive adhesive agent layer: 100 µm, glass cloth: 100 µm), was produced.
The resultant convertible pressure-sensitive adhesive agent (C6) was evaluated. Table 2 shows the results.

**[Table 2]**

| | Backing | Cross-linking agent | | | Evaluation | | |
|---|---|---|---|---|---|---|---|
| | | HDDA (part(s) by weight) | 4HBAGE (part(s) by weight) | EBECRYL 9200 (part(s) by weight) | Pressure-sensitive adhesive strength (N/25 mm) | High-temperature pressure-sensitive adhesive property test*1 200°C | High-temperature adhesive property test*2 700°C |
| Example 7 | Absent | 0.1 | 10 | - | 11.5 | ○ | ○ |
| Example 8 | Absent | 0.1 | 50 | - | 8.4 | ○ | ○ |
| Example 9 | Absent | 0.1 | - | 3 | 2.3 | Δ | ○ |
| Example 10 | Present | 0.1 | 10 | - | 11.8 | ○ | ○ |
| Comparative example 4 | Absent | 0.1 | - | - | 12.2 | × | × |
| Comparative example 5 | Absent | 0.1 | - | 1 | 3.5 | × | × |
| Comparative example 6 | Present | 0.1 | - | - | 12.4 | × | × |

As apparent from Table 2, it was confirmed that the convertible pressure-sensitive adhesive agents of the present invention was peeled from the glass plate to a reduced degree even when exposed to a high temperature of 200°C, and was not peeled from the glass plate even when exposed to a higher temperature of 700°C. On the other hand, it was confirmed that each of the convertible pressure-sensitive adhesives agent according to Comparative Examples was peeled from a half or more of the glass plate when exposed to a high temperature of 200°C, and was completely peeled from the glass plate when exposed to a higher temperature of 700°C.

Thus, it is found that the convertible pressure-sensitive adhesive agent of the present invention allows adherends to be instantly fixed to each other, allows the adherends to be reattached to each other, is excellent in processability such as being able to be cut into a sheet shape, and is not peeled from the adherends even when exposed to a high-temperature atmosphere such as one in a fire, whichmeans extremely excellent heat resistance.

### (Example 11)

0.1 Part by weight of 1,6-hexanediol diacrylate (HDDA), 50 parts by weight of phosphoric acid-based frit (manufactured by TAKARA STANDARD CO., LTD., VY0144, deformation point: 397°C, average particle diameter: 10 µm), and 1 part by weight of an amino ether-based antioxidant (trade name: "TINUVIN 123, "manufactured by BASF) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (11) having a sheet shape with a thickness of 100 µm was produced.
The resultant convertible pressure-sensitive adhesive agent (11) was evaluated. Table 3 shows the results.

### (Example 12)

0.1 Part by weight of 1,6-hexanediol diacrylate (HDDA), 50 parts by weight of phosphoric acid-based frit (manufactured by TAKARA STANDARD CO., LTD., VY0144, deformation point: 397°C, average particle diameter: 10 µm), and 3 parts by weight of an amino ether-based antioxidant (trade name: "TINUVIN 123," manufactured by BASF) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (12) having a sheet shape with a thickness of 100 µm was produced.
The resultant convertible pressure-sensitive adhesive agent (12) was evaluated. Table 3 shows the results.

### (Example 13)

0.1 Part by weight of 1,6-hexanediol diacrylate (HDDA), 50 parts by weight of phosphoric acid-based frit (manufactured by TAKARA STANDARD CO., LTD., VY0144, deformation point: 397°C, average particle diameter: 10 µm), and 1 part by weight of a phenol-based antioxidant (trade name: "IRGANOX 1010, "manufactured by BASF) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (13) having a sheet shape with a thickness of 100 µm was produced.
The resultant convertible pressure-sensitive adhesive agent (13) was evaluated. Table 3 shows the results.

### (Example 14)

0.1 Part by weight of 1,6-hexanediol diacrylate (HDDA), 50 parts by weight of phosphoric acid-based frit (manufactured by TAKARA STANDARD CO., LTD., VY0144, deformation point: 397°C, average particle diameter: 10 µm), and 1 part by weight of an amino ether-based antioxidant (trade name: ""TINUVIN 123, "manufactured by BASF) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 100 µm. A glass cloth (manufactured by UNITIKA LTD., E10T-4W, thickness: 100 µm) was placed on the resultant applied surface, a cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (14) with a backing, having a sheet shape with a thickness of 200 µm (convertible pressure-sensitive adhesive agent layer:100 µm, glass cloth: 100 µm), was produced.
The resultant convertible pressure-sensitive adhesive agent (14) was evaluated. Table 3 shows the results.

### (Comparative Example 7)

0.1 Part by weight of 1,6-hexanediol diacrylate (HDDA) and 50 parts by weight of phosphoric acid-based frit (manufactured by TAKARA STANDARD CO., LTD., VY0144, deformation point:397°C, average particle diameter: 10 µm) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (C7) having a sheet shape with a thickness of 100 µm was produced.
The resultant convertible pressure-sensitive adhesive agent (C7) was evaluated. Table 3 shows the results.

### (Comparative Example 8)

0.1 Part by weight of 1,6-hexanediol diacrylate (HDDA) and 50 parts by weight of phosphoric acid-based frit (manufactured by TAKARA STANDARD CO., LTD., VY0144, deformation point:397°C, average particle diameter: 10 µm) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 100 µm. A glass cloth (manufactured by UNITIKA LTD., E10T-4W, thickness: 100 µm) was placed on the resultant applied surface, a cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (C8) with a backing, having a sheet shape with a thickness of 200 µm (convertible pressure-sensitive adhesive agent layer: 100 µm, glass cloth: 100 µm), was produced.
The resultant convertible pressure-sensitive adhesive agent (C8) was evaluated. Table 3 shows the results.

**[Table 3]**

| | Backing | Antioxidant | | Evaluation | | |
|---|---|---|---|---|---|---|
| | | Kind | Part(s) by weight | Pressure-sensitive adhesive strength (N/25 mm) | High-temperature pressure-sensitive adhesive property test*1 200°C | High-temperature adhesive property test*2 700°C |
| Example 11 | Absent | TINUVIN 123 | 1 | 11.9 | ○ | ○ |
| Example 12 | Absent | TINUVIN 123 | 3 | 11.7 | ○ | ○ |
| Example 13 | Absent | IRGANOX 1010 | 1 | 12.0 | ○ | ○ |
| Example 14 | Present | TINUVIN 123 | 1 | 12.3 | ○ | ○ |
| Comparative example 7 | Absent | Absent | - | 12.2 | × | × |
| Comparative example 8 | Present | Absent | - | 12.4 | × | × |

As apparent from Table 3, it was confirmed that the convertible pressure-sensitive adhesive agent of the present invention was not peeled from the glass plate even when exposed to a high temperature of 200°C, and was not peeled from the glass plate even when exposed to a higher temperature of 700°C. On the other hand, it was confirmed that each of the convertible pressure-sensitive adhesives agents according to Comparative Examples was peeled from a half or more of the glass plate when exposed to a high temperature of 200°C, and was completely peeled from the glass plate when exposed to a higher temperature of 700°C.

Thus, it is found that the convertible pressure-sensitive adhesive agent of the present invention allows adherends to be instantly fixed to each other, allows the adherends to be reattached to each other, is excellent in processability such as being able to be cut into a sheet shape, and is not peeled from the adherends even when exposed to a high-temperature atmosphere such as one in a fire, whichmeans extremely excellent heat resistance.

### (Example 15)

0.1 Part by weight of 1,6-hexanediol diacrylate (HDDA), 25 parts by weight of phosphoric acid-based frit (manufactured by TAKARA STANDARD CO., LTD., VY0144, deformation point: 397°C, average particle diameter: 10 µm), and 25 parts by weight of phosphoric acid-based frit (manufactured by TAKARA STANDARD CO., LTD., VY0053, deformation point: 498°C, average particle diameter: 10 µm) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (15) having a sheet shape with a thickness of 100 µm was produced.
The resultant convertible pressure-sensitive adhesive agent (15) was evaluated. Table 4 shows the results.

### (Example 16)

0.1 Part by weight of 1,6-hexanediol diacrylate (HDDA), 20 parts by weight of phosphoric acid-based frit (manufactured by TAKARA STANDARD CO., LTD., VY0144, deformation point: 397°C, average particle diameter: 10 µm), 20 parts by weight of phosphoric acid-based frit (manufactured by TAKARA STANDARD CO. , LTD., VY0062, deformation point: 458°C, average particle diameter: 10 µm), and 20 parts by weight of phosphoric acid-based frit (manufactured by TAKARA STANDARD CO., LTD., VY0053, deformation point: 498°C, average particle diameter: 10 µm) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (16) having a sheet shape with a thickness of 100 µm was produced.
The resultant convertible pressure-sensitive adhesive agent (16) was evaluated. Table 4 shows the results.

### (Comparative Example 9)

0.1 Part by weight of 1,6-hexanediol diacrylate (HDDA) was added to 100 parts by weight of the photopolymerizable syrup (**A**) obtained in Synthesis Example 1, and as uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (C9) having a sheet shape with a thickness of 100 µm was produced.
The resultant convertible pressure-sensitive adhesive agent (C9) was evaluated. Table 4 shows the results.

### (Comparative Example 10)

0.1 Part by weight of 1,6-hexanediol diacrylate (HDDA) and 50 parts by weight of phosphoric acid-based frit (manufactured by TAKARA STANDARD CO., LTD., VY0144, deformation point:397°C, average particle diameter: 10 µm) were added to 100 parts by weight of the photopolymerizable syrup (**A**) obtained in Synthesis Example 1, and were uniformly dispersed therein with a disper. The resultant dispersion was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the applied layer. Thus, a convertible pressure-sensitive adhesive agent (C10) having a sheet shape with a thickness of 100 µm was produced.
The resultant convertible pressure-sensitive adhesive agent (C10) was evaluated. Table 4 shows the results.

**[Table 4]**

| | Sinterable particles | | Evaluation | | |
|---|---|---|---|---|---|
| | Kind | Deformation point (°C) | Pressure-sensitive adhesive strength (N/25 mm) | High-temperature adhesive property test*3 | |
| | | | | 500°C~ | 700°C~ |
| Example 15 | VY0144 | 397 | 3.8 | ○ | ○ |
| | VY0053 | 498 | | | |
| Example 16 | VY0144 | 397 | 3.1 | ○ | ○ |
| | VY0062 | 458 | | | |
| | VY0053 | 498 | | | |
| Comparative example 9 | - | - | 6.4 | × | × |
| Comparative example 10 | VY0144 | 397 | 3.3 | ○ | × |

As apparent from Table 4, it was confirmed that the convertible pressure-sensitive adhesive agent of the present invention was not peeled from the glass plate even when exposed to high temperatures of 500°C and 700°C. On the other hand, it was confirmed that each of the convertible pressure-sensitive adhesives agents according to Comparative Examples was completely peeled from the glass plate when exposed to a high temperature of 700°C.

Thus, it is found that the convertible pressure-sensitive adhesive agent of the present invention allows adherends to be instantly fixed to each other, allows the adherends to be reattached to each other, is excellent in processability such as being able to be cut into a sheet shape, and is not peeled from the adherends even when exposed to a high-temperature atmosphere such as one in a fire, whichmeans extremely excellent heat resistance.

### Industrial Applicability

The convertible pressure-sensitive adhesive agent of the present invention allows adherends to be instantly fixed to each other, allows the adherends to be reattached to each other, and is not peeled from the adherends even when exposed to a high-temperature atmosphere such as one in a fire. Therefore, the convertible pressure-sensitive adhesive agent of the present invention can be effectively utilized not only in an application involving no exposure to a high-temperature atmosphere, but also in an application involving exposure to a high-temperature atmosphere.

### Reference Signs List

- **10**: polymer component
- **20**: sinterable particle
- **100**: convertible pressure-sensitive adhesive agent
- **200**: glass plate
- **300**: test body
- **400**: screw for fixation

## Claims

1. A pressure-sensitive adhesive agent convertible into an adhesive agent, which has pressure-sensitive adhesive property before being sintered, and which has adhesive property after being sintered.

2. A pressure-sensitive adhesive agent convertible into an adhesive agent according to claim 1, wherein the pressure-sensitive adhesive agent convertible into an adhesive agent comprises: sinterable particles; and a polymer component.

3. A pressure-sensitive adhesive agent convertible into an adhesive agent according to claim 2, wherein the polymer component has a cross-linked structure.

4. A pressure-sensitive adhesive agent convertible into an adhesive agent according to claim 3, wherein all monomer components for forming the polymer component contain a cross-linking monomer at a content ratio of 2.0 wt% to 60 wt%.

5. A pressure-sensitive adhesive agent convertible into an adhesive agent according to claim 4, wherein the cross-linking monomer has at least one kind of functional group selected from an acryloyl group, an epoxy group, an isocyanate group, a carboxyl group, a hydroxyl group, a vinyl group, and an amino group.

6. A pressure-sensitive adhesive agent convertible into an adhesive agent according to any one of claims 2 to 5, wherein the polymer component contains an antioxidant.

7. A pressure-sensitive adhesive agent convertible into an adhesive agent according to claim 6, wherein a content ratio of the antioxidant is 0.1 wt% to 10 wt% with respect to a solid content of the pressure-sensitive adhesive agent convertible into an adhesive agent.

8. A pressure-sensitive adhesive agent convertible into an adhesive agent according to claim 6 or 7, wherein the antioxidant comprises at least one kind selected from a phenol-based antioxidant, an amine-based antioxidant, an amino ether-based antioxidant, and a phosphorus-based antioxidant.

9. A pressure-sensitive adhesive agent convertible into an adhesive agent according to any one of claims 2 to 8, wherein a deformation point of each of the sinterable particles is 250°C to 800°C.

10. A pressure-sensitive adhesive agent convertible into an adhesive agent according to any one of claims 2 to 9, wherein the sinterable particles contain two or more kinds of sinterable particles having different deformation points.

11. A pressure-sensitive adhesive agent convertible into an adhesive agent according to claim 10, wherein a deformation point of a sinterable particle having a lowest deformation point among the two or more kinds of sinterable particles having different deformation points is 250°C to 800°C.

12. A pressure-sensitive adhesive agent convertible into an adhesive agent according to claim 11, wherein the deformation point of the sinterable particle having a lowest deformation point is 250°C to 500°C.

13. A pressure-sensitive adhesive agent convertible into an adhesive agent according to any one of claims 2 to 12, wherein the sinterable particles are each formed of at least one kind of component selected from silicic acid, boric acid, borosilicic acid, aluminum oxide, calcium oxide, sodium oxide, lithium oxide, and phosphorus oxide.

14. A pressure-sensitive adhesive agent convertible into an adhesive agent according to any one of claims 2 to 13, wherein an average particle diameter of each of the sinterable particles is 0.1 µm to 1,000 µm.

15. A pressure-sensitive adhesive agent convertible into an adhesive agent according to any one of claims 2 to 14, wherein a content ratio of the sinterable particles is 1 wt% to 80 wt% with respect to a solid content of the pressure-sensitive adhesive agent convertible into an adhesive agent.

16. A pressure-sensitive adhesive agent convertible into an adhesive agent according to any one of claims 2 to 15, wherein the polymer component comprises at least one kind of component selected from a rubber-based polymer, a silicone-based polymer, and an acrylic polymer.

17. A pressure-sensitive adhesive agent convertible into an adhesive agent according to any one of claims 1 to 16, wherein the pressure-sensitive adhesive agent convertible into an adhesive agent has a sheet shape.

18. A pressure-sensitive adhesive agent convertible into an adhesive agent according to claim 17, wherein a thickness of the pressure-sensitive adhesive agent convertible into an adhesive agent is 1 µm to 1,000 µm.

19. A pressure-sensitive adhesive agent convertible into an adhesive agent according to any one of claims 2 to 18, wherein a material for forming the polymer component contains a photopolymerization initiator.

20. A pressure-sensitive adhesive agent convertible into an adhesive agent according to any one of claims 1 to 19, wherein the pressure-sensitive adhesive agent convertible into an adhesive agent is obtained by photopolymerization.

21. A production method for the pressure-sensitive adhesive agent convertible into an adhesive agent according to any one of claims 1 to 20, the production method comprising:
partially polymerizing a polymerizable composition, which contains monomer components to be used for forming a polymer component and a photopolymerization initiator, to prepare a polymerizable syrup;
adding sinterable particles to the polymerizable syrup, followed by uniform dispersion of the sinterable particles in the polymerizable syrup; and
subjecting the dispersion to photopolymerization (curing) by photoirradiation.
